## Europäisches Patentamt
## European Patent Office
## Office européen des brevets

(19)

(11) Numéro de publication: **0 250 324 B1**

(12) **FASCICULE DE BREVET EUROPEEN**

(45) Date de publication du fascicule du brevet:
28.03.90

(51) Int. Cl.⁴: **F01D 9/04**, F04D 29/54

(21) Numéro de dépôt: 87401370.9

(22) Date de dépôt: 18.06.87

(54) **Redresseur de soufflante de turboréacteur multiflux.**

(30) Priorité: 18.06.86 FR 8608775

(43) Date de publication de la demande:
23.12.87 Bulletin 87/52

(45) Mention de la délivrance du brevet:
28.03.90 Bulletin 90/13

(84) Etats contractants désignés:
DE FR GB

(56) Documents cités:
EP-A- 0 171 329
DE-C- 879 487
DE-C- 967 089
FR-A- 2 321 616
GB-A- 802 508
US-A- 2 925 998

(73) Titulaire: SOCIETE NATIONALE D'ETUDE ET DE
CONSTRUCTION DE MOTEURS D'AVIATION,
"S.N.E.C.M.A.", 2, boulevard du Général Martial Valin,
F-75015 Paris(FR)

(72) Inventeur: Feuvrier, Thierry, 2, Résidence des Princes,
F-78590 Noisy Le Roi(FR)
Inventeur: Forestier, Alexandre, 451, rue du Tertereau,
F-77000 Vaux Le Penil(FR)

(74) Mandataire: Molnat, François, S.N.E.C.M.A. Service des
Brevets Boîte Postale 81, F-91003 Evry Cédex(FR)

ACTORUM AG

## Description

La présente invention concerne un redresseur de soufflante de turboréacteur du genre multiflux qui comporte généralement un étage d'aubes fixes disposé dans un canal de flux secondaire, à la sortie d'un étage mobile d'aubes rotoriques placé devant lui et à la sortie duquel le flux est dirigé vers l'arrière d'une part, dans le canal de flux secondaire et, d'autre part, vers les étages suivants de compression du flux primaire, avant et arrière étant définis par rapport au sens normal de circulation des gaz dans la machine.

Par rapport à des redresseurs connus antérieurement et dans lesquels sont couramment utilisées des aubes métalliques du genre superalliage, la recherche de moindres masses, particulièrement intéressante pour les applications aux turboréacteurs, conduit à définir des aubes en utilisant soit un alliage léger à base d'aluminium sous forme laminé et plié soit un matériau composite à base de fibres minérales ou organiques.

Par rapport aux solutions antérieures se pose dès lors un problème de fixation des aubes d'un redresseur de soufflante pour lequel ce genre d'aubes convient particulièrement.

Certains éléments de solution se trouvent dans les dispositions antérieures. FR 2 321 616 montre une aube dont l'extrémité radialement interne est encastrée dans un joint élastomère emboîté dans des découpes d'une virole interne. Dans ce cas, l'extrémité radialement externe de l'aube comporte une plate-forme fixée par des boulons à une virole extérieure.

Ce mode connu de fixation à l'extrémité externe est toutefois inadapté pour les aubes du genre évoqué ci-dessus et présente en outre divers inconvénients. Au moins deux vis par aube doivent être utilisées et avec un couple de serrage déterminé et suffisamment élevé, ce qui entraine des complications de montage. En outre, ce mode de montage conduit à un empilage des tolérances angulaires qui peuvent être à l'origine de difficultés.

On connaît également par DE-C 967 029 des aubes insérées dans des ouvertures coopérantes d'une couronne externe et dont l'extrémité radialement extérieure comporte une plate-forme boulonnée sur ladite couronne, par exemple au moyen de deux vis.

Ces divers inconvénients sont évités par l'invention selon laquelle un redresseur de soufflante de turboréacteur du genre défini ci-avant est caractérisé en ce que l'extrémité radialement externe de la pale de chaque aube est repliée dans sa totalité et vers un seul côté en équerre et est susceptible de passer à travers l'une des ouvertures d'une forme dite en persienne de la couronne externe et en ce que des moyens complémentaires maintiennent serrée une face de chaque pale d'aube contre un bord de ladite ouverture coopérante.

Avantageusement, la partie repliée en équerre de chaque aube est tenue serrée entre ladite couronne externe et un carter de soufflante au moyen de vis de fixation de la couronne au carter associées à des entretoises dont la base recouvre en partie ladite ouverture de la couronne au droit du passage de la pale d'aube et à des joints assurant l'étanchéité de la veine de circulation des gaz, entre la tête de vis et l'entretoise.

Ces dispositions, en permettant une réduction des masses du redresseur de soufflante, réduisent le nombre de vis utilisées à une par aube, acceptent un couple de serrage modéré des vis, simplifient le montage et facilitent la maintenance. Tout problème de tolérance angulaire est supprimé.

D'autres avantages et caractéristiques de l'invention ressortiront mieux de la description qui va suivre d'un mode de réalisation de l'invention, en référence aux dessins annéxes sur lesquels:

- la figure 1 est une vue en demi-coupe axiale de la partie avant d'un turboréacteur à double flux comportant un redresseur de soufflante conforme à l'invention,
- la figure 2 est une vue agrandie de la partie encadrée selon II de la figure 1 montrant le détail du montage conforme à l'invention d'une aube fixe de redresseur,
- la figure 3 est une vue partielle en coupe selon III-III représentant la partie radialement externe du montage d'aube de la figure 2,
- la figure 4 est une vue partielle developpée montrant la couronne externe du redresseur de la figure 2,
- la figure 5 est une vue agrandie de la partie encadrée V de la figure 3 montrant le détail de la fixation de la couronne externe du redresseur au carter de soufflante.

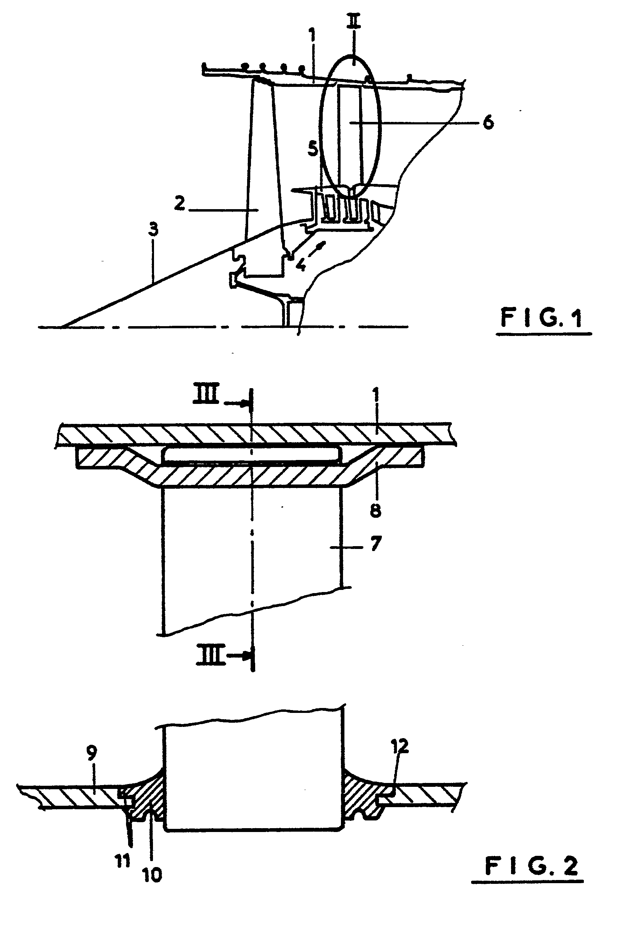

La partie avant d'un turboréacteur à double flux représentée à la figure 1 comporte un carter 1 de soufflante à l'intérieur duquel est placé un rotor 2 de soufflante dont ledit carter 1 délimite l'entrée d'air avec un cône avant 3. A la sortie dudit rotor 2, le flux d'air se subdivise en un flux primaire entrant dans un compresseur 4 et en un flux secondaire s'écoulant à travers un canal secondaire annulaire délimité extérieurement par le carter 1 et intérieurement par une paroi interne 5 enveloppant la partie primaire de turboréacteur. Dans ce canal secondaire est placé un étage d'aubes fixes constituant le redresseur 6 de soufflante.

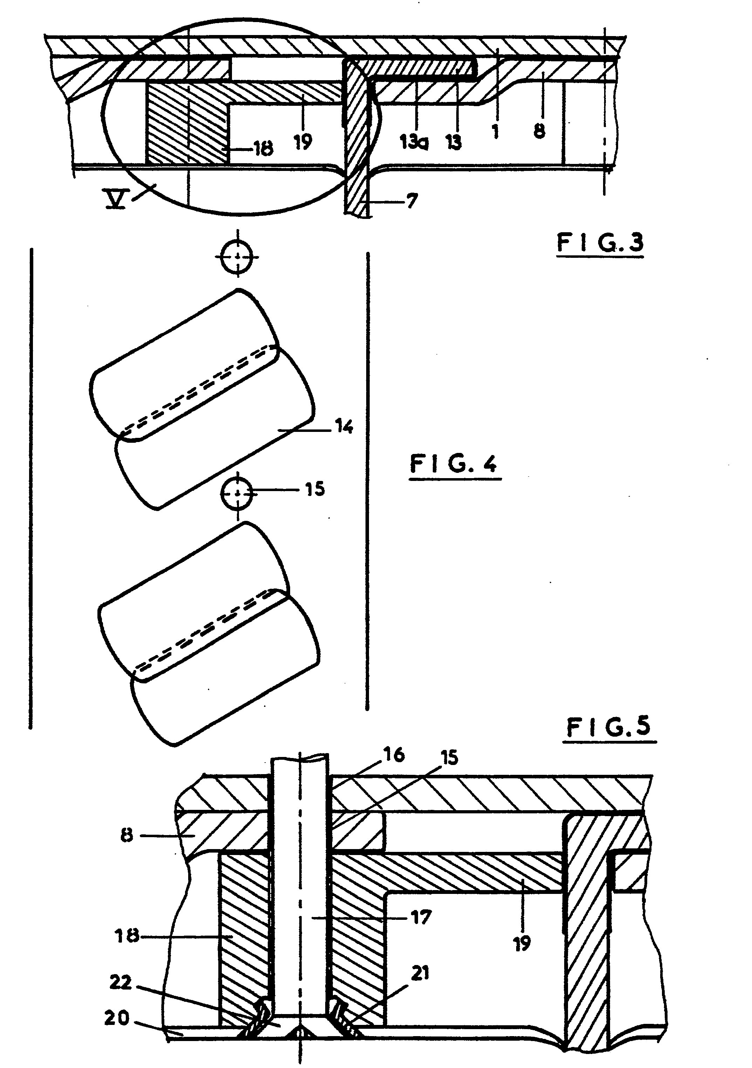

La vue de détail de la figure 2 montre le montage d'une aube 7 du redresseur 6, entre une couronne 8 radialement externe et une couronne 9 radialement interne. Côté interne, l'extrémité de la pale d'aube 7 est encastrée dans un joint 10 en élastomère qui est emboîté en 11 dans une découpe 12 de la couronne interne 9. Ce joint 10 assure à la fois l'étanchéité de la veine des gaz et l'amortissement des vibrations entre l'aube 7 et la couronne 9. Pour le côté externe, on se reportera également aux figures 3 et 4. La partie d'extrémité externe de la pale d'aube 7 est repliée à angle droit en équerre 13 et comporte un amortisseur 13a surmoulé en matériau polymère du type silicone. La couronne externe 8 en tôle comporte des ouvertures 14 en forme de persiennes dans lesquelles sont insérées les extrémités de pales d'aubes. L'équerre 13 vient se placer entre la couronne externe 8 et la surface interne du carter 1 de soufflante. La couronne externe 8 comporte également des trous de fixation 15 intercalés entre les ouvertures 14 et le carter 1 comporte des trous correspondants 16. Des vis 17 traversant les trous 15 et 16 assurent la fixation de la couronne 8 au carter 1 ainsi que la fixation d'entretoises 18 placées du côté interne de la couronne 8, au droit des trous 15. La figure 5 représente le détail de cette fixation. Les entretoises 18 sur la face en contact avec la couronne 8 comportent une base 19 qui recouvre partiellement les ouvertures 14 et vient s'ajuster à la paroi de la pale d'aube 7. Sur la face opposée des entretoises 18, les vis 17 assurent également la fixation d'un élément annulaire 20 qui délimite le profil externe de la veine des gaz. Un joint d'étanchéité 21 est placé entre les têtes 22 de vis 17 d'une part, et les entretoises 18 et élément annulaire 20, d'autre part. De cette manière, on obtient la fixation des aubes 7 de redresseur et les diverses étanchéités sont assurées.

## Revendications

1. Redresseur de soufflante de turboréacteur multiflux du genre comportant un étage d'aubes fixes (7) régulièrement disposées entre une couronne interne (9) et une couronne externe (8) dans laquelle sont ménagées des ouvertures (14) traversées par l'extrémité desdites aubes (7) caractérisé en ce que l'extrémité radialement externe de la pale de chaque aube (7) est repliée dans sa totalité et vers un seul côté, en équerre (13) et est susceptible de passer à travers l'une desdites ouvertures (14) d'une forme dite en persienne et en ce que des moyens complémentaires (17–19) maintiennent serrée une face de chaque pale d'aube (7) contre un bord de ladite ouverture (14) coopérante.

2. Redresseur de soufflante selon la revendication 1 caractérisé en ce que la partie repliée en équerre (13) de chaque aube (7) est tenue serrée entre ladite couronne externe (8) et un carter (1) de la soufflante au moyen de vis (17) de fixation de la couronne (8) au carter (1) associées à des entretoises (18) dont la base (19) recouvre en partie ladite ouverture (14) de la couronne (8) au droit du passage de la pale d'aube (7) et à des joints (21) assurant l'étanchéité de la veine de circulation des gaz, entre la tête (22) de vis (17) et l'entretoise (18).

3. Redresseur de soufflante selon la revendication 2 caractérisé en ce que lesdits moyens de fixation maintiennent également un élément annulaire (20) interne qui délimite le profil externe de la veine.

## Patentansprüche

1. Leitapparat für den Bläser eines Mehrstrom-Turbotriebwerks mit einer Stufe mit festen Schaufeln (7), die in regelmäßiger Verteilung zwischen einem Innnenkranz (9) und einem Außenkranz (8) angeordnet sind, wobei in dem Außenkranz (8) Öffnungen (14) angebracht sind, durch die die Enden der genannten Schaufeln (7) hindurchtreten, dadurch gekennzeichnet, daß das radial äußere Ende (13) jedes Schaufelblatts (7) in seiner Gesamtheit und nach nur einer Seite rechtwinklig abgebogen ist und durch eine der jalousienartig angeordneten Öffnungen (14) hindurchtreten kann und daß komplementäre Mittel (17–19) eine Seite jedes Schaufelblatts (7) gegen einen Rand der mit ihm zusammenwirkenden Öffnung (14) klemmen.

2. Leitapparat nach Anspruch 1, dadurch gekennzeichnet, daß der rechtwinklig abgebogene Teil (13) jeder Schaufel (7) mit Schrauben (17), die zur Befestigung des Außenkranzes (8) an einem Gehäuse (1) des Bläsers dienen, zwischen dem Außenkranz (8) und dem Gehäuse (1) festgeklemmt wird, wobei diesen Schrauben (17) Riegelteile (18) zugeordnet sind, deren Basis (19) die Öffnung (14) des Außenkranzes (8) an der Durchtrittsstelle des Schaufelblatts (7) teilweise abdeckt, und wobei zwischen dem Kopf (22) der Schrauben (17) und dem Riegelteil (18) Dichtungen vorgesehen sind, die die Dichtigkeit der Gaszirkulationsströmung gewährleisten.

3. Leitapparat nach Anspruch 2, dadurch gekennzeichnet, daß die Befestigungsschrauben (17) außerdem ein inneres ringförmiges Element (20) halten, das das Außenprofil der Strömung begrenzt.

## Claims

1. Flow straightener for the ducted fan of a multiflow gas turbine engine of the kind incorporating a stage of fixed blades (7) uniformly arranged between an inner ring (9) and an outer ring (8) in which are formed openings (14) through which extend the ends of the said blades (7) characterised in that the radially outer end of each blade (7) is bent across its full width and to one side to form a right angle (13) and is able to pass through the said openings (14) in the form of a louvred shutter, and in that a complementary means (17–19) maintains one side of each blade (7) clamped against the edge of the said opening (14) with which it is associated.

2. A ducted fan flow straightener in accordance with Claim 1 characterised in that the part bent at right angles (13) of each blade (7) is maintained clamped between the said outer ring (8) and the housing (1) of the fan by means of the screws (17) used to fix the ring (8) to the housing (1) in association with the spacers (18) of which the base (19) covers in part the said opening (14) of the ring (8) in the area where the blade (7) passes through it and with the seals (21) which ensure the airtightness of the airstream between the heads (22) of the screws (17) and the spacers (18).

3. A ducted fan flow straightener in accordance with Claim 2 characterised in that the said means of fastening also retain an inner annular component (20) which defines the outer limit of the airstream.

EP 0 250 324 B1

F I G . 1

F I G . 2

**FIG.3**

**FIG.4**

**FIG.5**